# EUROPEAN PATENT SPECIFICATION

(11) **EP 2 670 110 B1**
(45) Date of publication and mention of the grant of the patent: **08.07.2015**
(21) Application number: 12382224.9
(22) Date of filing: 01.06.2012
(51) Int. Cl.: H04L 29/08, G06F 17/30

(54) **Method, system and devices for improved content delivery**
Verfahren, System und Vorrichtungen zur verbesserten Inhaltsbereitstellung
Procédé, système et dispositifs de fourniture de contenu améliorée

(43) Date of publication of application: 04.12.2013
(73) Proprietor: ALCATEL LUCENT, 92100 Boulogne-Billancourt (FR)
(72) Inventor: Villegas Nuñez, Alvaro, 28050 Madrid (ES); Ferguson, David, Cambridge, CB23 7AP (GB); Kisel, Andrey, Maidenhead, SL6 2PJ (GB); Niven-Jenkins, Benjamin, Cambridge, Aberdeenshire CB4 0WG (GB)
(74) Representative: Sciaux, Edmond

(56) References cited:
- US-A1- 2002 016 801
- US-A1- 2002 078 178
- US-A1- 2004 073 925
- US-A1- 2004 172 376

## Description

### BACKGROUND OF THE INVENTION

### Technical field

The present invention relates to the field of content delivery networks and more particularly specifically to a method, system and device for improving the operation of a content delivery network.

### Description of related art

As the popularity of next generation network applications increases, such as video on demand, Internet television services, live events transmissions..., the number and size of the files and other media objects to be distributed to end users over Internet is significantly increasing.
When service providers needed to serve such files to their end users, most of the time, they distributed them by hosting them in servers in their data center. But the consumer pattern was not always uniform. There may be sudden bursts of traffic requesting web based content from consumers located around the globe. To accommodate for the demand, service providers needed to estimate and provision additional servers in quantities enough for handling peak loads. Moreover, on the Internet, there is always a factor of RTT (Round Trip Time) and Packet Loss that needs to be considered, and these parameters have a higher effect on the consumers who are located at greater distances from the servers. To accommodate for these limitations, Content Delivery Networks were created to deliver content to end users.
A Content Delivery Network (also called Content Distribution Network) is a network of servers (usually hosted by a service provider) that cooperate to deliver content to end users. Said servers are located in multiple locations of the world so as to achieve optimal bandwidth and network utilization for clients, as the content could always be served from a server that is relatively near to the consumer requesting for it. And besides, since multiple servers are used, the load is distributed and consumers get faster better quality content.
There are several key type of servers in a Content Delivery Network (CDN): The Origin Server(s) where the content to be distributed is originally stored and Surrogate Servers (also called edge servers or cache servers), where the content is delivered to the client. There is generally one or few Origin Servers (either in the customer's data center or in the cloud) and many Surrogate servers (in multiple locations across the world). There are other types of servers such as reporting management servers. All the available content may be duplicated in each Surrogate server but this is not economical because there are many surrogate servers (deployed in many geo-distributed locations close to clients) and the amount of content to be duplicated may be huge. Hence, usually the content is stored in a centralized location on Origin server and surrogate server acquires content copy from Origin server (or from other server which may have a content copy) when the client requests it. Surrogate server may store the acquired copy to serve subsequent client requests (cache content). If clients subsequently request other content, surrogate server acquires and caches it removing older content from its cache memory. That is, when a consumer is requesting a particular content on the Internet, it can be served by a Surrogate server nearest to the consumer's geographical location. If the content is available there, the Surrogate server sends it to the client and otherwise, Surrogate server fetches the content quickly from the origin server (or from other servers which may have a content copy), optionally after protocol/route optimizations.

The present invention deals with content delivery to various clients in a content delivery network. The presented embodiments are going to refer to media content but the embodiments are applicable as well to any other type of content. Said media content includes but not limited to live and on demand media content like music, images, video, multimedia, audio or any other type of media content or media objects.

Several different technologies are currently used for content delivery, for example streaming and adaptive streaming technologies such as Apple Live Streaming (which uses HTTP live streaming, HLS), Adobe HTTP Dynamic Streaming (which uses HTTP dynamic streaming, HDS) or Microsoft Smooth Streaming. New technologies, such as MPEG DASH, are being developed with support from some key consumer electronics players Sony, Philips, Samsung and LG.
In Adaptive streaming typically the coded audio/video (which can be coded with common video/audio codecs such as H.264/AAC) is segmented. Depending on the format used, each media file can include only one of these segments or several segments. For example, Apple HLS stores each segment in a short media file, (which may use the extension *.ts), while Microsoft Smooth Streaming uses single ISO File Format (ISOFF) based segmented file, that is, the file includes several segments and uses container format ISOFF for delivering segments. Similarly, Adobe Dynamic Streaming uses single ISOFF based segmented (fragmented) file and uses different version of container format ISOFF for delivering segments. In some technologies, as Microsoft Smooth Streaming or Adobe Dynamic Streaming, said segments are called "fragments".

The rules for the player to retrieve file segments are kept in files, called manifest files. Manifest (or manifest file) is a standard technique used for adaptive streaming (e.g. in HTTP adaptive streaming). As explained before, during adaptive streaming a file is split into segments and the client needs to request segments sequentially. Manifest file tells the client what segments it can request (and where they are) to play media and their bit-rates.

Each of these formats results in a set of resources (manifest files and segments) identified by unique URLs which the end terminals request from the CDN.
For example, Apple iPhone and iPads players use HLS format. HLS format is based on segmenting H.264/AAC encoded video/audio encapsulated into MPEG-2 transport into a series of short media files, each file including a segment. Each file is referenced in the playlist (manifest) with a unique URL. In the example below three short files are created: videosequence001.ts, videosequence002.ts and videosequence003.ts.

### Example manifest file (*.m3u8)

#EXT-X-TARGETDURATION:10
#EXTINF:5220,
http://media.example.com/videosequence001.ts
http://media.example.com/videosequence002.ts
http://media.example.com/videosequence003.ts
#EXT-X-ENDLIST

Microsoft Smooth Streaming is based on storing segments of compatible video/audio encoded media (e.g. H.264/AAC) in segmented ISOFF files. Smooth Streaming player (e.g. in Silverlight) learns about different bit-rate files from manifest and how to build the URLs of the desired fragments, which are then retrieved from the CDN.
The CDN, therefore, needs to propagate all those resources (manifests and segments) for the different formats in parallel. Such approach makes media publishing, storage, caching and delivery straightforward. However, it requires extra CDN resources for storage, core network bandwidth and Origin Server capacity. Moreover, existing approach acts as a barrier for fast introduction of new delivery formats. Content Management System (CMS), e.g. encoders, has to introduce support for new delivery formats. CDN has to be dimensioned to store, cache and deliver corresponding new media objects with required QoE.

The best known and most efficient prior art solution prepares content into multiple delivery formats for different player types and makes each format available at the Origin server in the prepared state for being 'propagated to'/'requested by' the delivery server (surrogate server).

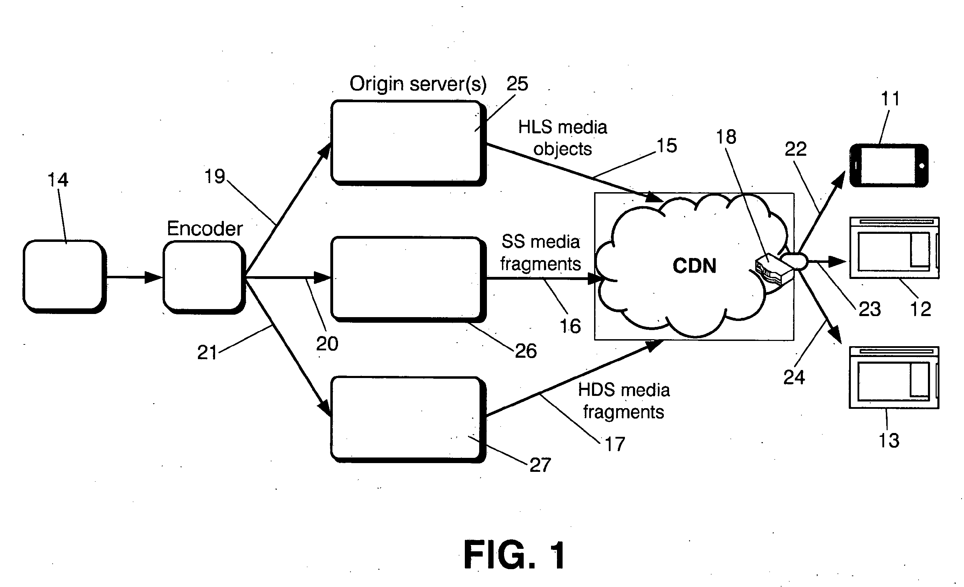

An exemplary prior art scenario is shown in figure 1. In this example, there are several clients, an iPhone/iPad (HLS player) (11), Microsoft Silverlight Web browser plug-in or Microsoft Set Top Box ,STB (12) and a flash Website on PC (13) (Adobe Flash or Adobe Integrated Runtime player). They require the same media content (14) with the same media quality, but CDN needs to deliver to surrogate server (18) multiple media objects (that is, media files) containing essentially the same encoded audio/video (e.g. H.264/AAC) 4, but encapsulated differently and with different delivery format. In Apple Live Streaming technology (used by the iPhone/iPad client), the H.264/AAC encoded content (19) will be encapsulated into MPEG-2 transport stream which will be segmented in the origin server (25) and each segment stored in a short media file which will have a specific defined structure. So the media object for the iPhone/iPad client, would contain Apple video file (15,22)
In Microsoft Smooth Streaming technology (used by the Microsoft Silverlight Player or Set Top Box), the H.264/AAC encoded content (20) will be segmented and then encapsulated in the origin server (26) using ISOFF based format, forming a segmented ISOFF file with an specific format. So the media object for the Microsoft Silverlight Player or Set Top Box, would be contained inside an ISOFF fragment (16,23)
In Adobe HTTP Dynamic Streaming technology (used by the PC), the H.264/AAC encoded content (21) will be segmented and encapsulated in the origin server (27) also using ISOFF, forming a fragmented ISOFF file but with another format. So the media object for the PC client would be contained inside an ISOFF fragment (17,24), which is different from the above mentioned ISOFF fragment (16, 23).

Each technology may use a different transmission protocol (Real Time Protocol RTP for the Apple Live Streaming technology, HTTP for the Microsoft Smooth Streaming and Real Time Messaging Protocol, RTMP for the Adobe HTTP Dynamic Streaming technology). In a common embodiment each technology can use the same transmission protocol HTTP.

All those multiple media objects are cacheable CDN objects, which consume CDN and Origin Server resources to create, distribute and manage them. This in turn reduces the ability of CDN to maximise bandwidth and optimise network utilization.
Another drawback of the prior art is that introduction of new delivery formats requires extra storage and network resources to handle corresponding new media files/objects. It will act as a cost and time barrier slowing Service Provider's ability to support new terminals. For example, several Consumer Electronics manufacturer's (Sony, Phillips, Panasonic, Samsung) plan to profile MPEG DASH ISO/IEC 230001-1 and add DASH specific amendments to the ISOFF file format specification ISO/IEC 14496-12. New profiles are intended for retail connected TVs and DVD/Blu-Ray players. While large level of similarity is likely to exist between various DASH profiles, and even with other ISOFF based solutions like Smooth Streaming, the new profiles are unlikely to interoperate without some 'translation' with existing broadly used ISOFF based solutions.

Prior art document US2004/0172376 a content distribution scenario wherein content is delivered with embedded content specifying information according to the client's requests.

Another prior art solution allows transformation (re-packaging) of content at a video aware surrogate server. However, the main drawback of this approach is that the surrogate requires to be video aware, i.e. to have the logic necessary to know how to locate and extract video and audio from one encapsulation, how to correctly compute another encapsulation often with accurate time base, and how to re-insert audio video into newly computed encapsulation. Overall system becomes very inefficient, especially since multiple surrogate servers effectively require performing the same very costly calculations to repackage the same segment into the same new encapsulation. This way, due to the complex tasks that the surrogate servers must perform, the performance of the system degrades significantly.

In summary, existing solutions for delivering content to clients using different technologies/format are not efficient, require many CDN resources such as storage and core network bandwidth and are not easily scalable especially for supporting new delivery formats. Moreover, addition of new media delivery formats requires growth in storage and core network bandwidth. The embodiments of the invention stated below will overcome at least some of these drawbacks.

### SUMMARY

The embodiments of the present invention suggest an innovative approach, which is not based on creating and propagating to the surrogate server multiple media delivery formats for servicing different client types. New approach aims at reducing storage, network bandwidth, Origin server capacity and other CDN resources making the proposed CDN superior in terms of cost efficiency, scalability and flexibility. This approach is applicable to serving various established client such as Apple HLS, Smooth Streaming or new emerging formats MPEG DASH.

According to a first aspect of the invention, a method is provided for improved delivery of a certain content to client terminals in a content delivery network, the content delivering network comprising at least a first server and a second server, the method comprising the following steps:
a) The first server storing the certain content in a first format.
b) The first server analyzing the certain content and, taking into account at least the result of said analysis, creating rules specific for said certain content to transform the content from the first format to at least a second format.
c) The second server receiving a request requesting the certain content from a device, where the content has to be delivered to said device in the second format.
d) The second server checking if the requested content in the second format is available in the second server and if not, the second server requesting to another server of the Content Delivery network the certain content in the second format.
e) When receiving the requests from the second server, said another server obtaining the content in the first format and the rules to transform the content in the first format to a second format and sending them to the second server.
f) When receiving the content in the first format and the rules, the second server applying the rules to transform the content from the first format to the second format.
g) The second server sending the content in the second format to the device requesting the content.

The content may be a media content as music, images, video, audio/video, multimedia presentations, audio, media objects, or any other type of media content.
Or course, if in step d) the second server sees that the requested content in the second format is available in the second server, said second server goes directly to step g (i.e. it sends the content in the second format to the device without requesting the content to another server).

The another server of the Content Delivery network receiving the requests from the second server, and obtaining and sending the content in the first format and the rules to the second server, may be the first server or a third server different from the first server where the first server has previously sent the certain content in the first format and the rules.

The device requesting the content may be client terminal or another server of the content delivery network which may have previously received a request from a client terminal requesting the content in the second format.

In an exemplary embodiment, the first server is an Origin server of the Content Delivery Network and the second server is a Surrogate Server of the Content Delivery Network.

In an exemplary embodiment, the first and second formats are one of the following group: Apple Live Streaming, Adobe HTTP Dynamic Streaming, Microsoft Smooth Streaming and MPEG DASH, being the second format different from the first format.

In an exemplary embodiment the step a) of the first server storing a certain content in a first format comprises: the first server segmenting the content according to the first format and storing in the first server the segments of the content in the first format and
the step b) of the first server analyzing the certain content and creating rules to transform the content from the first format to at least a second format comprises: the first server segmenting the content according to the second format, the first server analyzing the content (segments) in the first and second format and as a result of said analysis, creating the specific instructions to transform each segment in the first format to one or several segments in the second format and the first server storing the instructions to transform each segment in the first format to one or more segments in the second format and
the step of sending to the second server the content in the first format and the rules to transform the content in the first format to a second format in step e) comprises: sending to the second server, the segments of the content in the first format and the instructions to transform each segment in the first format to one or more segments in the second format and
the step of the second server applying the rules to transform the content in the first format to the second format in step f comprises: the second server applying the instructions to transform each segment in the first format to one or more segments in the second format.

The segments may be for example MPEG2TS segments, ISOFF file segments or any other type of segments.

In an exemplary embodiment, the rules contain at least instructions identifying the positions of the parts of the content in the first format which must be copied to build the content in the second format and the pre-calculated encapsulation boxes, headers or other delivery or transport related information which have to be inserted and the respective positions where they must be inserted, to build the content in the second format.

In an exemplary embodiment, after transforming the content from the first format to the second format, the second server may store the content in the second format and, optionally, delete the content in the first format and the rules or alternatively the second server stores the content in the first format and the rules to transform the content from the first format to the second format and delete the content in the second format.

In an exemplary embodiment, prior to requesting the content, the device (a client terminal or another server) acquires manifest file from the first server or form other server indicated by the Service Provider.

In an exemplary embodiment, the step of the second server checking if the content in the requested second format is available in the second server comprises: the second server checking if the requested content in the requested second format is stored in the second server and the second server checking if the requested content in the first format and the rules to transform the content from the first format to the second format are stored in the second server.

In an exemplary embodiment, the first server does not store the content in the second format. That is, it stores only the content in the first format and the rules to transform the content from the first to the second format.

According to a second aspect of the invention, a system is provided for improved delivery of a certain content to a plurality of client terminals in a content delivery network, the system comprising:
- A first server which comprises:
   - means for storing the certain content in a first format and means for analyzing the certain content and, as a result of said analysis, creating rules specific for said certain content to transform the content from the first format to at least a second format.
- A second server which comprises:
   - means for receiving a request from a device requesting the certain content in the second format
   - means for checking if the requested content in the requested second format is available in the second server and if not, requesting the certain content in the second format to another server of the content delivery network.
   - means for, when the second server receives from another server of the content delivery network, the content in the first format and the rules specific for said certain content to transform the content from the first format to at least a second format, the second server applying the rules to transform the content in the first format to the second format and sending the content in the second format to the device requesting the content.
The device requesting the content may be client terminal or another server of the content delivery network which has previously received a request from a client terminal requesting the content in the second format.

According to a third aspect of the invention, a device (a server) is provided improved delivery of a certain content to a plurality of client terminals in a content delivery network, the server comprising:
- means for storing the certain content in a first format and
- means for analyzing the certain content and, as a result of said analysis, creating rules specific for said certain content to transform the content from the first format to at least a second format
- means for, when the server receives a request from a second server requesting the certain content in the second format, the first server sending to the second server, the content in the first format and the rules to transform the content in the first format to a second format.

Said third aspect server may be an Origin Server of a Content Delivery Network.

According to a fourth aspect of the invention, a device (a server) is provided for improved delivery of content to a plurality of client terminals in a content delivery network, the server comprising:
- means for receiving a request from a device requesting a certain content in the second format
- means for checking if the requested content in the requested second format is available in the server and if not, requesting the certain content in the second format to another server of the content delivery network.
- means for, when the second server receives from another server of the content delivery network, the content in the first format and the rules specific for said certain content to transform the content from the first format to at least a second format, the second server applying the rules to transform the content in the first format to the second format and sending the content in the second format to the device requesting the content.
Said fourth aspect server may be a Surrogate Server of the Content Delivery Network.

According to another aspect of the invention, a computer program product is provided, comprising computer-executable instructions for performing any of the method previously disclosed, when the program is run on a computer and a digital data storage medium is also provided encoding a machine-executable program of instructions to perform any of the methods disclosed.

Consequently, according to the invention, a method, system, devices and computer program according to the independent claims are provided. Favorable embodiments are defined in the dependent claims.

These and other aspects of the invention will be apparent from and elucidated with reference to the embodiments described hereinafter.

### BRIEF DESCRIPTION OF THE DRAWINGS

Some embodiments of the method, system and device in accordance with embodiments of the present invention are now described, by way of example only, and with reference to the accompanying drawings, in which:
Figure 1 shows a schematic block diagram of content delivery in a prior exemplary scenario,
Figure 2 shows a schematic block diagram of a content delivery technique according to an embodiment of the present invention.

Throughout the figures like reference numerals refer to like elements.

### DESCRIPTION OF EMBODIMENTS

The present inventions may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope

The following embodiments solves some of the problems found in the prior art content delivery techniques.

The proposed embodiments disclosed the creation of specific rules objects for transformation of a certain encoded content (e.g. multimedia content as audio/video) from a certain format (that will be called from now on, original format) into multiple delivery formats. For each available delivery format, there may be a rule (or group of rules) which will define how a certain content file can be transformed from *'original'* format into said delivery format. The rules (that will be called from now on, transformation rules) can either be initially published to a network location (e.g. storage) or made available (e.g. by reverse proxying) on demand from the Origin server, and later cached inside CDN (in one or more Surrogate Servers). The content file (e.g. audio and video) in the original format can similarly either be published or made available for reverse -proxy acquisition from an Origin server.

Said rules are instructions created for each content and for each delivery format; i.e. they are not general rules about how to transform any content from a first format to a second format but specific instructions which allow the transformation of a certain content or content segments from an origin format to a second format. Said rules (instructions) will be created after analyzing the certain content in the original format and they will depend on the origin format, the delivery format and on the content which is going to be transformed. The rules are video format agnostic and the execution of the rules is generic, and does not require any video knowledge in the machine executing them.

The CDN will distribute and cache the content file (or its segments) in the original format and the transformation rules for said content file for multiple delivery formats. The Surrogate servers applies transformation rules ('at the moment of' or 'prior to' the audio/video delivery to a particular client terminal) creating a content file in the specific delivery format requested by the client according to the transformation rules. The size of rules is substantially, (usually in the order of magnitude) smaller (up to 90% smaller) than the corresponding transformed media content with the correspondent saving in resources as bandwidth and storage capacity.

In an exemplary embodiment, the content file is stored in the Origin server in a certain original format together with transformation rules for said content for multiple delivery formats. When the client requests the content file from a surrogate server, the surrogate server will acquire the content file in original format from the Origin server (or from another Surrogate Server where said information is stored) together with the transformation rules necessary to transform said content file from the original format to the format required by the client (if the requested format is other than original). Then the surrogate server transforms content file from original format to the format requested by the client using the transformation rules and serves the content (e.g. audio/video) to the client.

In an alternative embodiment, a Surrogate server can receive the content in the original format and the transformation rules, it transforms the content and pass it to another surrogate server which delivers the content to the client. This alternative embodiment can be also seen as if the device requesting the content in the delivery format is not a client terminal but another surrogate server (which may have received a request of the content in said format from a client terminal). For example, let's consider an scenario where a client requests a content in an specific delivery format to surrogate server 1 which cannot apply the transformation rules. Instead of transforming the content at the Origin server (as in the prior art), the Surrogate 1 is instructed to request content in the delivery format from Surrogate 2, which can apply transformation rules. Surrogate 2 requests the content in the original format and transformation rules from the Origin Server, transforms the content into the new format and then passes it to Surrogate 1 for serving to the client. This situation could be especially relevant for heterogeneous networks with new and legacy surrogate servers.

Of course if, when the client requests the content file in an specific delivery format from a surrogate server, the content file in the required format or the content file in the original format and the transformation rules are already stored in the Surrogate Server (for example, because they have been previously acquired from the origin server due to a previous client request of the same content in the same format), the content file is served to the client without the necessity of requesting anything to the origin server or to other surrogate server. The same way, if the content file in the original format is stored in the Surrogate Server (for example, because it has been previously acquired from the origin server due to a previous client request of the same content), only the transformation rules for said content file and for the requested format will be requested to the Origin Server.

In essence, original media content file (audio/video) segments can be treated as cacheable media objects. Similarly, the transformation rules can be treated as media transformation objects linked to each media content object. Media transformation object is applied by surrogate to 'original' audio/video object(s) (in some scenarios a rule object may require several original objects to build the resulting media in delivery format) to produce specific delivery format (carrying digital media). Once the specific delivery format have been produced at the Surrogate server, said server can cache either original object (the media content file in the original format) and the transformation rules, or 'transformed' media object (the media content file in the delivery format). This way only a copy of the content file (together with transformation rules to create other formats) is distributed to the Surrogate Servers in the CGN. In prior art solutions a copy of the content file in each one of the available formats would have been delivered, resulting in multiple transmissions of essentially the same content (and consequently, in a higher bandwidth occupation).

This principle is applicable to the Origin Server, e.g. if a surrogate in the CDN cannot apply rules, the Origin server can apply the rules to generate new delivery formats and deliver it to the Surrogate server, but it is not necessary that the Origin Server stores the content in the delivery format. It would provide benefits in terms of Origin storage.

As stated in a previous section, there is a prior art solution including a sort of transformation (re-packaging) of content in a video aware surrogate. But, as stated before, this prior art solution has several drawbacks and it is very different form the proposed solution. The main difference is how the information is being created at the Origin Server and delivered to and transformed at the surrogate server as it will be shown in the following example:
Let's say a prior art solution needs to transform Apple Live Streaming (HLS) segment into Microsoft Smooth Streaming (SS). The prior solution needs the Surrogate Server to parse HLS segment, extract video and audio from it.

Then the prior art solution needs to calculate Smooth Streaming boxes (data to be appended before and after audio and video also known as encapsulation) to create Smooth Streaming segment. In summary, prior arts need to
*a) extract video*/*audio and*
*b) calculate encapsulation boxes and segments.*

This requires the surrogate server to implement and maintain special logic a) and b) and application to execute them. Such logic and accompanying application are expensive in terms of computing power, resources and adds CapEx and OpEx overhead.

The suggested solution instead creates detailed rules about how to transform 'original' format, (e.g. HLS segment), into the delivery format (e.g. SS Smooth Streaming) segment and sends the rules to surrogate server. Typically rules are created per segment. The rules can be applied in the surrogate server without video "intelligence" because said video intelligence is already included in the rules, for example the rules can contain simple copy instruction and already pre-calculated encapsulation boxed, so the surrogate only needs to apply the rules without parsing original segment itself.

That is, only one server in the CDN (the origin server) needs to have the intelligence to know how to extract the video/audio and calculate the encapsulation boxes. With said "intelligence", the origin server is able to create detailed simple rules which can be applied by the surrogate server, without the need of parsing original the segment or make any complex calculation.

The suggested solution also removed the need to distribute from Origin Server to surrogate the content file in the encapsulations HLS, SS as in another prior art trying to avoid implementing logic a) and b) at the surrogate.

In other words, an important feature of the suggested embodiments is that the surrogate servers are not required to have or maintain any special logic to implement the transformation from the original format to the delivery format. For example, in the case of video the surrogate server in the proposed embodiment do not have to know (i.e. have the necessary logic to perform said actions) how to extract video form the original format and compute the new format, making surrogate very cost efficient to implement. In the prior art (re-packaging) solution, surrogate server need to implement this logic and bear associated computing costs. In the suggested solution it is extracted at the Origin server and translated into simple copy instructions (or other types of simple instructions or rules) and pre-calculated encapsulations which need to be applied 'blindly' by the surrogate. Therefore we can say that surrogate is not 'video aware' (and just follow copy and other transformation instructions containing in the rules) or that the required "video awareness" is extracted during the creation of transformation rules and "stored" in the rules. In such a way, the execution of the rules for generating multiple formats becomes a lightweight process, which does not need to be modified in order to add new formats to the delivery network (e.g. CDN).

In an exemplary embodiment, said original format (in which the content is stored in the Origin Server) may be a non standard format. That is, the original format may be an special format (for example, created by the provider which hosts the Content Delivery Network), not supported by any client terminal, and transformation rules are created by the Origin Server to transform the content in said "special" format to a content in the formats required by the client terminals.

In an alternative embodiment, the content file (audio/video) is stored in a "standard" format supported by some terminal types and the transformation rules allow its transformation to another format for delivery to other terminal types. For example, let's say that the content file is stored in files containing MPEG2-TS (Transport Stream) segments (for iPhone/iPad or HLS compliant clients). The transformation rules can allow re-encapsulation original MPEG2TS segments into ISOFF file (for Microsoft Smooth Streaming, SS, complaints clients) or any other format fragments. The rules can be as simple as basic instructions for example about where, in the MPEG2TS, are the audio/video parts which the surrogate server has to copy to ISOFF *.mdat media segments, the pre-computed objects such as *moof, *.traf (and others) which have to be inserted in the ISOFF *.mdat segment and their respective positions in the ISOFF. The rules may say for example "'To create Smooth Streaming segment copy block from position AAA to position BBB (that would be a video block) and append data block 018fdA33c (which may be one of the pre-computed encapsulation blocks) at the beginning". Put together they would allow create new format from original format, which means that surrogate does not need to parse original segment to find that video is contained between positions AAA and BBB, and create encapsulation header 018fdA33c itself. Rather it executes a sequence of simple transformation instructions, which in this embodiment are just copy instructions and insertion of pre-computed headers.

Using this approach, the surrogate does not require de-multiplexing MPEG2TS and extracting video stream, instead it will just perform simple and efficient copy operations. In other words, instead of sending "original audio/video file" and rules for generating multiple encapsulations, the suggested invention may produce a valid particular encapsulation (e.g. MPEG2TS as in the example above) and the rules for generating other supported encapsulations from it.

The key difference from the prior art approach is that Origin servers do not store and serve multiple copies of media data encapsulated into different delivery formats. Instead a single media object is generated and stored together with the transformation rules specific for said media data. Surrogate server does not require caching multiple copies of media data encapsulated into different delivery formats. However, in another embodiment, surrogate server may choose to cache some of the delivery formats after applying the transformation rules is the popularity of formats are high. The transformation rules contain media (video/audio) intelligence and the Surrogate server applies the transformation rules.

In another exemplary embodiment, the surrogate server can re-segment (e.g. produce different length segments) for clients connected via different access networks. HLS clients connected via WiFi network can choose a certain manifest which uses smaller segments size (e.g. 2 sec), while HLS clients connected via GPRS/EDGE/3G network can choose another manifest and larger segments (e.g. 10 sec). Smaller segment size reduces tuning time and latency for live events. As explained before, the re-segmentation would be included in the transformation rules. That is, the surrogate server do not have to analyze the information to extract the content, calculate the new segments and re-segment all the content, but it only have to apply the specific transformation rules.

While content protection is outside of the main scope of the proposed embodiment, there are several options regarding content protection. The media content can be encrypted at the origin server using common key, and then decrypted and re-encrypted at the surrogate server using per-session encryption after applying the transformation rules. Alternatively, the media content can be delivered "unencrypted" to the surrogate server using secure method such as HTTPS and the 'unencrypted' media objects would be encrypted at the surrogate server. The rules may further include instructions for encrypting portions of the segments using keys which will be made available at the surrogate server by the DRM (digital right managements) key servers. In another embodiment, the encryption itself may be done through rules, so the surrogate can implement many encryption formats without having to implement specialised logic to create them.

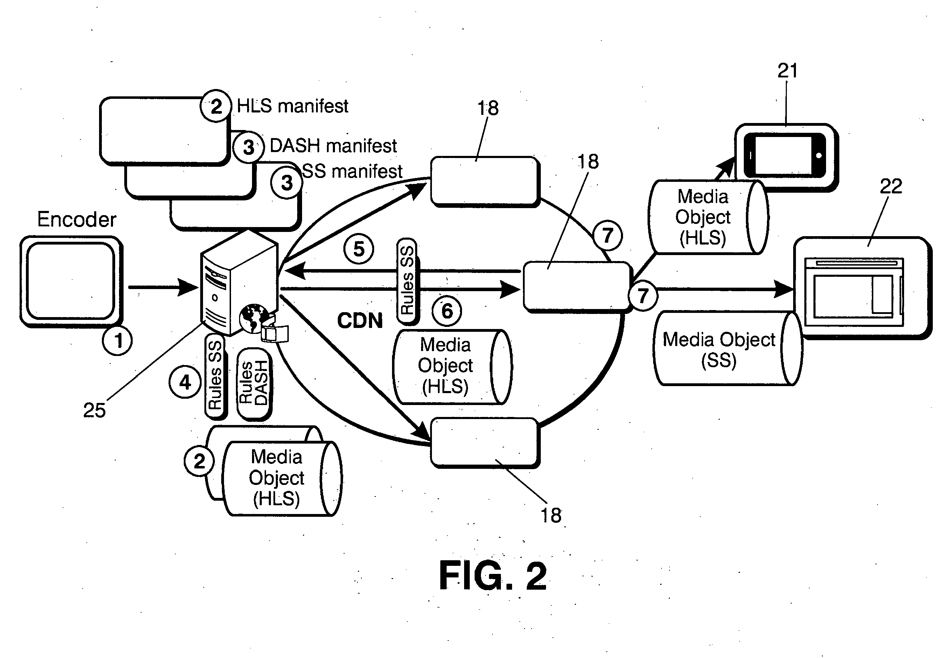

In an exemplary embodiment (shown in figure 2), the proposed content delivery network serves HLS and Smooth Streaming terminals among other. Origin server (e.g. HTTP origin server) takes MPEG2TS encapsulated audio/video (e.g. H.264/AAC) and segments into media files for a given quality level e.g. /videosequence1.ts, /videosequence2.ts... The Origin also generates rule objects describing how each *.ts segment file should be transformed into one or several ISOFF file fragments (segments) for matching audio/video quality (with the necessary encapsulation). The rules contain sufficient information for the surrogate to produce SmoothStreaming segments without de-multiplexing original MPEG2TS segments. Some of the key data which form each Smooth Streaming segment are:
- A movie fragment header box (mfhd) and a track fragment box (traf). Together they form what is called the movie fragment (moof).
- The media data itself (mdat).

So, in this case, the rules created to convert the MPEG2TS content in Smooth Streaming content would contain at least:
- pre-computed set of movie fragment boxes 'moof' containing movie fragment header box 'mfhd' and track fragment box 'traf' for each fragment and their positions to be included in the ISOFF fragment
- pointers (positions) to audio/video data in the original MPEG2TS segment from where the media data must be copied into 'mdat' box of the ISOFF fragment
with these rules the ISOFF segments will be created. Some extra rules may be required depending on the video/audio encoding. For example, the encapsulation of H.264 NAL units is different in MPEG2TS and in ISOFF and, therefore, rules may be added to change such encapsulation. Said detailed extra rules will depend on the specific encoding profiles.

Said rules are generated in the origin server for each MPEG2TS segment. Depending on an implementation choice the rules for each segment can be stored and distributed for each segment or all the rules for all the segments of the whole content may be stored all together and distributed as a large rules file for the whole content. That is, rules are handled as segments, and the Origin server can either store them separately or aggregate in a bigger file
Each single MPEG2TS segment may be transformed into single ISOFF file fragment. However, usually a single MPEG2TS file segment is transformed into more than one ISO file fragments (also it can be vice versa that several MPEG2TS segments are transformed into a single ISOFF fragment, e.g. when the length of the segment is changed for different access networks). In general a single HLS segment will produce many Smooth Streaming segments: several video segments and several audio segments, in fact. But it is not even mandatory that the boundaries of the segments are the same in both cases: the Smooth Streaming segmentation may happen at different boundaries as the HLS segment.

In the process of generating rules the origin server might physically re-format audio/video from MPEG2TS into Smooth Streaming format, however, instead of making ISOFF segments available to the CDN, the Origin makes rule objects available to the CDN (and the Surrogate Server using said rules will transform the original MPEG2TS format into the Smooth Streaming Format). That is, the Origin server serves original format and transformation rules instead of serving the exact format request by the surrogate as in the prior art.

In a first exemplary embodiment of the present invention (shown in figure 2), the following steps are implemented:
1. Content is published to Origin Server (25), for example as a continuous video stream in one of supported formats such as MPEG2TS. That is, the content is pushed or sent somehow to the Origin Server and the Origin Server stored said content.
2. Origin server segments content into a certain storage format, also called original format (e.g. HLS segments), optionally creates manifest file and stores HLS segments and manifest if any. There may be more than one storage original format (but usually there is only one to save storage capacity in the origin server).
3. Origin Server creates segments and optionally the manifest for other formats (called 'delivery formats'), in this example, SS or DASH. The origin server stores manifest if any, but it may not store the segments
4. Origin Server analyzes the content in the first format and optionally the created segments in the second format, and derives transformation rules from created segments: instructions and pre-calculated headers to transform each 'storage format' segment into 'delivery format' segments (e.g HLS->SS or HLS->DASH) and stores the rules. For each available delivery format, there will be a rule (or group of rules) for transformation of the content from the original format into said delivery format.
5. Prior to requesting video delivery the client terminal acquires manifest from Origin server or from other server indicated by the Service Provider. Of course, surrogate server can cache and deliver manifest to the client. Then, the client terminal requests to one of the surrogate servers the content segments (usually sequentially) according to the information stored in the manifest file. Then, when said surrogate server receives said segment request from the client terminal, it requests SS or HLS segments from Origin Server. In figure 2, it is shown as a single step (5) but usually the Surrogate Server will firstly requests one type of segments (for example, the HLS segments due to a request of the client supporting HLS, e.g. an i-phone terminal) and afterwards the Surrogate Server will requests the other type of segments (for example, the SS segments due to a request of the client supporting Microsoft Smooth Streaming, e.g. a Microsoft STB).
   In an alternative embodiment when receiving the content request from the client terminal, the surrogate server can request more segments to the Origin Server than requested by the client (without waiting for the specific segment request from the client terminal). This is done to improve response time and the client typically 'hints' the surrogate what segments it may request later.
6. Origin Server returns the requested HLS segments and rules to transform HLS segments into SS segments (HLS->SS) to the Surrogate Server.
7. The Surrogate server creates SS segments using the rules and sends the HLS segments and the SS segments to the clients requesting each type of segments.

Let's explain step 5 with manifest files, a little bit more in detail. Prior to the Apple HLS client requests the content to the Surrogate, the client acquires manifest from Origin server or other server indicated by the Service Provider. Of course, surrogate server can cache and deliver manifest to the client. Then, the client can request specific segments using HTTP URLs discovered from manifest files directly from the Surrogate server, e.g. http://media.example.com/videosequence1.ts, http://media.example.com/videosequence2.ts
Similarly, prior to the Smooth Streaming client requests the content to the Surrogate, the client acquires manifest from Origin server or other server indicated by the Service Provider. Of course, surrogate server can cache and deliver manifest to the client. Then, the client can request the segments using discovered HTTP URLs from the manifest directly to a surrogate server. Then the surrogate server requests the ISOFF segments to the Origin Server directly or the Surrogate server maps requested ISOFF segments into resources required to compute them (e.g. HLS segments and associated transformation rules to transform the HLS segments into SS segments) and it requests said resources to the Origin Server (or from other nearer CDN location as a Surrogate server where said information is also stored). In both cases, the surrogate server receives the HLS segment and the rules and transforms MPEG2TS segment into the requested Smooth Streaming segment. A similar technique will be applied for transformation to other formats as MPEG DASH.

Of course, also other type of terminals can be served by the CDN (as clients using Adobe Flash or Adobe Integrated Runtime player). In this case, the Origin will also generates rule objects describing how each *.ts segment file should be transformed into one or several segments of HDS files (e.g. *.F4F).

In the above example, it has been supposed that a client terminal is requesting the content to a Surrogate server but the same process is applicable when the content request is received by a surrogate server from another surrogate server.

Multiple optimizations are possible during the transformation and can be incorporated into the rules. For example, transformation rules may contain instructions to copy only a subset of available audio tracks or subset of video data for fast tuning to live channels or any other type of content delivery customization and optimization (for example, content encryption).

Summarizing, the presented embodiments potentially have the following advantages when compared with the prior art:
- they require far less CDN resources such as storage and core network bandwidth for supporting multiple terminal types, which leads to substantial cost reductions for CDN operators
- they allow fast and cost efficient addition of new delivery formats providing CDN customers with superior "time to market", TTM, for new emerging delivery formats (e.g. MPEG DASH profiles) compared to prior art solutions.
- As shown, they keep all video awareness in the origin server, keeping the CDN video-format agnostic. That is, video intelligence inside the rules reduces load on the Surrogate server because it does not need to have logic for parsing original segment to find video/audio and logic for calculating encapsulations for new formats
- Broad applicability beyond repackaging, e.g. to watermarking, for example, marking content with invisible by human eye digital marks to prevent unauthorized copying and distribution

The advantage of the suggested solution will be quantified in the following example. Let's say CDN serves Apple HLS and Microsoft Smooth Streaming clients with equal probability of receiving HLS or SS request for the same asset. Both HLS and SS asset use the same audio/video codec and bit-rate. Typical overhead of MPEG2TS in relation to audio/video is a function of encoded bit-rate among other parameters. For example, MPEG2TS encapsulation may introduce up to 15% overhead for 364 kbps audio/video, up to 10% for 864kbps and less for higher bitrates, e.g. up to 5% for 2000000 kbps. Generally, ISOFF file overhead is considered to be less than MPEG2TS.

In the worst case scenario (where ISOFF file overhead and transformation rules together have a similar overhead as MPEG2TS, let's say 10% for 864 kbps), the suggested invention allows to reduce core BW and network storage for the second stream by 90%. With the second stream, we mean here a separate request from surrogate server to request the same content but with a second format (ISOFF files) from the Origin server.

Extra revenues and savings due to fast TTM for new delivery formats are more difficult to quantify without customer specific study, but we estimate them to be differentiating and not Negligible.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.
Content and media content may refer to any type of electronic materials such as music, videos, software, books, multimedia presentations, images, text and other electronic data which can be delivered as a stream or transferred, for example over a network to one or more users.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.
It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for improved delivery of a certain content to client terminals in a content delivery network, the content delivering network comprising at least a first server and a second server, the method comprising the following steps:
a) The first server storing the certain content in a first format;
b) The first server analyzing the certain content and creating rules specific for said certain content to transform the content from the first format to at least a second format;
c) The second server receiving a request requesting the certain content from a device, where the content has to be delivered to said device in the second format;
d) The second server checking if the requested content in the second format is available in the second server and if not, the second server requesting to another server of the Content Delivery network the certain content in the second format;
e) When receiving the requests from the second server, said another server obtaining the content in the first format and the rules to transform the content in the first format to a second format and sending them to the second server.
f) When receiving the content in the first format and the rules, the second server applying the rules to transform the content from the first format to the second format;
g) The second server sending the content in the second format to the device requesting the content;
where the step a) comprises: the first server segmenting the certain content according to the first format and storing in the first server the segments of the content in the first format and
where the step b) comprises: the first server segmenting the content according to the second format, the first server analyzing the content in the first and second format and as a result of said analysis, creating the specific instructions to transform each segment in the first format to one or several segments in the second format and the first server storing the instructions to transform each segment in the first format to segments in the second format and
where the step of sending to the second server the content in the first format and the rules to transform the content in the first format to a second format in step e) comprises: sending to the second server, the segments of the content in the first format and the instructions to transform each segment in the first format to one or more segments in the second format and
where the step of the second server applying the rules to transform the content in the first format to the second format in step f) comprises: the second server applying the instructions to transform each segment in the first format to one or more segments in the second format.

2. A method according to any of the previous claims where the server sending the content in the first format and the rules to the second server in step e) is the first server.

3. A method according to claim 1 where the server sending the content in the first format and the rules to the second server in step e) is a third server different from the first server, where said third server has previously received from the first server the certain content in the first format and the rules.

4. A method according to any of the previous claims where the device requesting the content is a client terminal.

5. A method according to any of the claims 1-3 where the device requesting the content is another server of the content delivery network which has previously received a request from a client terminal requesting the content in the second format.

6. A method according to any of the previous claims where the first server is an Origin server of the Content Delivery Network and the second server is a Surrogate Server of the Content Delivery Network.

7. A method according to any of the previous claims where the content is media content as music, images, video, audio/video, multimedia presentations, audio, or any other type of media content

8. A method according to any of the previous claims where the first and second format are one of the following group: Apple Live Streaming, Adobe HTTP Dynamic Streaming, Microsoft Smooth Streaming and MPEG DASH, being the second format different from the first format.

9. A method according to any of the previous claims where the rules contain at least instructions identifying the positions of the parts of the content in the first format which must be copied to build the content in the second format and the pre-calculated encapsulation boxes, headers or other delivery or transport related information which have to be inserted and the respective positions where they must be inserted, to build the content in the second format.

10. A system for improved delivery of a certain content to a plurality of client terminals in a content delivery network, the system comprising:
- A first server which comprises:
- means for storing the certain content in a first format and means for analyzing the certain content and, as a result of said analysis, creating rules specific for said certain content to transform the content from the first format to at least a second format where said means comprises means for segmenting the certain content according to the first format and storing the segments of the content in the first format and for segmenting the content according to the second format, analyzing the content in the first and second format and as a result of said analysis, creating the specific instructions to transform each segment in the first format to one or several segments in the second format and storing the instructions to transform each segment in the first format to segments in the second format
- A second server which comprises:
- means for receiving a request from a device requesting the certain content in the second format
- means for checking if the requested content in the requested second format is available in the second server and if not, requesting the certain content in the second format to another server of the content delivery network;
- means for, when the second server receives from another server of the content delivery network the content in the first format, comprising segments of the content in the first format, and the rules specific for said certain content to transform the content from the first format to at least a second format, comprising the instructions to transform each segment in the first format to one or more segments in the second format, the second server applying the rules to transform the content in the first format to the second format where said means including means for applying the instructions to transform each segment in the first format to one or more segments in the second format and means for sending the content in the second format to the device requesting the content.

11. A server for improved delivery of a certain content to a plurality of client terminals in a content delivery network, the server comprising:
- means for storing the certain content in a first format where said means comprises means for segmenting the certain content according to the first format and storing the segments of the content in the first format
- means for analyzing the certain content and, as a result of said analysis, creating rules specific for said certain content to transform the content from the first format to at least a second format where said means comprises means for segmenting the content according to the second format, analyzing the content in the first and second format and as a result of said analysis, creating the specific instructions to transform each segment in the first format to one or several segments in the second format and storing the instructions to transform each segment in the first format to segments in the second format
- means for, when the server receives a request from a second server requesting the certain content in the second format, the server sending to the second server, the content in the first format and the rules to transform the content in the first format to a second format where said means comprises means for sending to the second server, the segments of the content in the first format and the instructions to transform each segment in the first format to one or more segments in the second format.

12. A server for improved delivery of a certain content to a plurality of client terminals in a content delivery network, the server comprising:
- means for receiving a request from a device requesting a certain content in a second format
- means for checking if the requested content in the requested second format is available in the server and if not, requesting the certain content in the second format to another server of the content delivery network;
- means for, when the server receives from another server of the content delivery network the content in a first format, comprising segments of the content in the first format, and the rules specific for said certain content to transform the content from the first format to at least a second format, comprising the instructions to transform each segment in the first format to one or more segments in the second format, the server applying the rules to transform the content in the first format to the second format where said means including means for applying the instructions to transform each segment in the first format to one or more segments in the second format and means for sending the content in the second format to the device requesting the content.

13. A computer program product comprising computer-executable instructions for performing the method according to any of the claims 1-9, when the program is run on a computer.

14. A digital data storage medium encoding a machine-executable program of instructions to perform a method according to any of the claims 1-9.

## Patentansprüche

1. Verfahren für die verbesserte Lieferung eines bestimmten Inhalts an Kundenterminals in einem Content-Delivery-Netzwerk, wobei das Content-Delivery-Netzwerk mindestens einen ersten Server und einen zweiten Server umfasst, wobei das Verfahren die folgenden Schritte umfasst:
a) Der erste Server speichert den bestimmten Inhalt in einem ersten Format;
b) Der erste Server analysiert den bestimmten Inhalt und erstellt spezifische Regeln für den besagten Inhalt, um den Inhalt von dem ersten Format in mindestens ein zweites Format umzuwandeln;
c) Der zweite Server erhält eine Anfrage, bei der der bestimmte Inhalt von einer Vorrichtung angefragt wird, wobei der Inhalt an die besagte Vorrichtung in dem zweiten Format gesendet werden muss;
d) Der zweite Server prüft, ob der angeforderte Inhalt in dem zweiten Format im zweiten Server verfügbar ist und falls nicht, fordert der zweite Server von einem anderen Server des Content-Delivery-Netzwerks den bestimmten Inhalt in dem zweiten Format an;
e) Beim Empfangen der Anfragen vom zweiten Server erhält der besagte andere Server den Inhalt in dem ersten Format sowie die Regeln zum Umwandeln des Inhalts in dem ersten Format in ein zweites Format und sendet sie an den zweiten Server.
f) Beim Empfangen des Inhalts in dem ersten Format sowie der Regeln wendet der zweite Server die Regeln an, um den Inhalt von dem ersten Format in das zweite Format umzuwandeln;
g) Der zweite Server sendet den Inhalt im zweiten Format an die den Inhalt anfordernde Vorrichtung;
wobei der Schritt a) umfasst: Segmentierten des bestimmten Inhalts gemäß dem ersten Format durch den ersten Server und Speicherung der Segmente des Inhalts in dem ersten Format in dem ersten Server und
wobei der Schritt b) umfasst: Segmentieren des Inhalts gemäß dem zweiten Format durch den ersten Server, Analysieren des Inhalts durch den ersten Server in dem ersten und zweiten Format und als Ergebnis der besagten Analyse, Erstellen der spezifischen Anweisungen, um jedes Segment in dem ersten Format in ein oder mehrere Segmente in dem zweiten Format umzuwandeln und Speichern der Anweisungen durch den ersten Server, um jedes Segment in dem ersten Format in Segmente in dem zweiten Format umzuwandeln
und
wobei der Schritt, bei dem der Inhalt in dem ersten Format und die Regeln zum Umwandeln des Inhalts in dem ersten Format in ein zweites Format in Schritt e) an den zweiten Server gesendet werden, umfasst: Senden der Segmente des Inhalts in dem ersten Format und der Anweisungen, um jedes Segment in dem ersten Format in ein oder mehrere Segmente in dem zweiten Format umzuwandeln, an den zweiten Server und wobei der Schritt, bei dem der zweite Server die Regeln zum Umwandeln des Inhalts in dem ersten Format in das zweite Format in Schritt f) anwendet, umfasst: Umsetzen der Anweisungen durch den zweiten Server, um jedes Segment in dem ersten Format in ein oder mehrere Segmente in dem zweiten Format umzuwandeln.

2. Verfahren nach einem beliebigen der vorstehenden Ansprüche, wobei es sich beim Server, der den Inhalt in dem ersten Format und die Regeln an den zweiten Sever in Schritt e) sendet, um den ersten Server handelt.

3. Verfahren nach Anspruch 1, wobei es sich beim Server, der den Inhalt in dem ersten Format und die Regeln an den zweiten Sever in Schritt e) sendet, um einen dritten Server handelt, der sich vom ersten Server unterscheidet, wobei der besagte dritte Server zuvor den bestimmten Inhalt in dem ersten Format und die Regeln vom ersten Server empfangen hat.

4. Verfahren nach einem beliebigen der vorstehenden Ansprüche, wobei es sich bei der den Inhalt anfordernden Vorrichtung um einen Kundenterminal handelt.

5. Verfahren nach einem der Ansprüche 1-3, wobei es sich bei der den Inhalt anfordernden Vorrichtung um einen weiteren Server des Content-Delivery-Netzwerks handelt, der zuvor eine Anfrage von einem Kundenterminal erhalten hat, bei dem der Inhalt im zweiten Format angefordert wurde.

6. Verfahren nach einem beliebigen der vorstehenden Ansprüche, wobei es sich bei dem ersten Server um einen Ursprungsserver des Content-Delivery-Netzwerks und bei dem zweiten Server um einen Ersatzserver des Content-Delivery-Netzwerks handelt.

7. Verfahren nach einem beliebigen der vorstehenden Ansprüche, wobei es sich bei dem Inhalt um einen Medieninhalt wie Musik, Bilder, Videos, Audio/Video, Multimediapräsentationen, Audio oder jede weitere Art von Medieninhalten handelt.

8. Verfahren nach einem beliebigen der vorstehenden Ansprüche, wobei es sich bei dem ersten und zweiten Format um eine der folgenden Gruppen handelt: Liveübertragungen von Apple, dynamische HTTP-Übertragung von Adobe, SmoothStreaming von Microsoft und MPEG-DASH, wobei sich das zweite Format vom ersten Format unterscheidet.

9. Verfahren nach einem beliebigen der vorstehenden Ansprüche, wobei die Regeln mindestens Anweisungen beinhalten, welche die Positionen der Teile des Inhalts in dem ersten Format identifizieren, die kopiert werden müssen, um den Inhalt in dem zweiten Format sowie die vorher berechneten Datenkapselungsfelder, Überschriften oder weitere auf die Lieferung oder den Transport bezogene Informationen zu erstellen, die eingefügt werden müssen, und die entsprechenden Positionen, wo sie eingefügt werden müssen, um den Inhalt im zweiten Format zu erstellen.

10. System für die verbesserte Lieferung eines bestimmten Inhalts an eine Vielzahl von Kundenterminals in einem Content-Delivery-Netzwerk, wobei das System umfasst:
- einen ersten das Folgende umfassenden Server:
- Mittel zum Speichern des bestimmten Inhalts in einem ersten Format und Mittel zum Analysieren des bestimmten Inhalts und, als Ergebnis der besagten Analyse, zum Erstellen von spezifischen Regeln für den besagten Inhalt, um den Inhalt von dem ersten Format in mindestens ein zweites Format umzuwandeln, wobei die besagten Mittel Mittel zum Segmentieren des bestimmten Inhalts gemäß dem ersten Format und zum Speichern der Segmente des Inhalts in dem ersten Format, und zum Segmentieren des Inhalts gemäß dem zweiten Format, zum Analysieren des Inhalts in dem ersten und zweiten Format und der Analyse zufolge, zum Erstellen der spezifischen Anweisungen, um jedes Segment in dem ersten Format in ein oder mehrere Segmente in dem zweiten Format umzuwandeln und zum Speichern der Anweisungen, um jedes Segment in dem ersten Format in Segmente in dem zweiten Format umzuwandeln, umfassen.
- Einen zweiten das Folgende umfassenden Server:
- Mittel zum Empfangen einer Anfrage von einer Vorrichtung, welche den bestimmten Inhalt in dem zweiten Format anfordert;
- Mittel zum Prüfen, ob der angeforderte Inhalt in dem zweiten angeforderten Format im zweiten Server verfügbar ist und falls nicht, zum Anfordern des bestimmten Inhalts in dem zweiten Format von einem weiteren Server des Content-Delivery-Netzwerks;
- Mittel, wenn der zweite Server den Inhalt in dem ersten Format von einem anderen Server des Content-Delivery-Netzwerks erhält, zum Umfassen der Segmente des Inhalts in dem ersten Format, und der spezifischen Regeln für den besagten bestimmten Inhalt, um den Inhalt von dem ersten Format in mindestens ein zweites Format umzuwandeln, zum Umfassen der Anweisungen, um jedes Segment in dem ersten Format in ein oder mehrere Segmente in dem zweiten Format umzuwandeln, wobei der zweite Server die Regeln anwendet, um den Inhalt in dem ersten Format in das zweite Format umzuwandeln, wobei die besagten Mittel Mittel beinhalten, um die Anweisungen umzusetzen, um jedes Segment in dem ersten Format in ein oder mehrere Segmente in dem zweiten Format umzuwandeln,
und Mittel zum Versenden des Inhalts in dem zweiten Format an die den Inhalt anfordernde Vorrichtung.

11. Server für die verbesserte Lieferung eines bestimmten Inhalts an eine Vielzahl von Kundenterminals in einem Content-Delivery-Netzwerk, wobei der Server Folgendes umfasst:
- Mittel zum Speichern des bestimmten Inhalts in einem ersten Format, wobei die besagten Mittel Mittel zum Segmentieren des bestimmten Inhalts gemäß dem ersten Format und zum Speichern der Segmente des Inhalts in dem ersten Format umfassen.
- Mittel zum Analysieren des bestimmten Inhalts und, als Ergebnis der besagten Analyse, zum Erstellen von spezifischen Regeln für den besagten Inhalt, um den Inhalt von dem ersten Format in mindestens ein zweites Format umzuwandeln, wobei die besagten Mittel Mittel zum Segmentieren des Inhalts gemäß dem zweiten Format, zum Analysieren des Inhalts in dem ersten und zweiten Format und, als Ergebnis der besagten Analyse, zum Erstellen der spezifischen Anweisungen, um jedes Segment in dem ersten Format in ein oder mehrere Segmente in dem zweiten Format umzuwandeln, und zum Speichern der Anweisungen, um jedes Segment in dem ersten Format in Segmente in dem zweiten Format umzuwandeln, umfassen.
- Mittel, wenn der Server eine Anfrage von einem zweiten Server erhält, bei welcher der bestimmte Inhalt in dem zweiten Format angefordert wird, für das Senden des Inhalts in dem ersten Format und der Regeln, um den Inhalt in dem ersten Format in ein zweites Format umzuwandeln, durch den Server an den zweiten Server, wobei die besagten Mittel Mittel zum Versenden der Segmente des Inhalts in dem ersten Format und der Anweisungen, um jedes Segment in dem ersten Format in ein oder mehrere Segmente in dem zweiten Format umzuwandeln, an den zweiten Server umfassen.

12. Server für die verbesserte Lieferung eines bestimmten Inhalts an eine Vielzahl von Kundenterminals in einem Content-Delivery-Netzwerk, wobei der Server Folgendes umfasst:
- Mittel zum Empfangen einer Anfrage von einer Vorrichtung, welche einen bestimmten Inhalt in einem zweiten Format anfordert;
- Mittel zum Prüfen, ob der angeforderte Inhalt in dem zweiten angeforderten Format im Server verfügbar ist und falls nicht, zum Anfordern des bestimmten Inhalts in dem zweiten Format von einem weiteren Server des Content-Delivery-Netzwerks;
- Mittel, wenn der Server den Inhalt in einem ersten Format von einem anderen Server des Content-Delivery-Netzwerks erhält, zum Umfassen von Segmenten des Inhalts in dem ersten Format und der spezifischen Regeln für den besagten bestimmten Inhalt, um den Inhalt in dem ersten Format in mindestens ein zweites Format umzuwandeln, zum Umfassen der Anweisungen, um jedes Segment in dem ersten Format in ein oder mehrere Segmente in dem zweiten Format umzuwandeln, wobei Server wendet die Regeln anwendet, um den Inhalt in dem ersten Format in das zweite Format umzuwandeln, wobei die besagten Mittel Mittel beinhalten, um die Anweisungen umzusetzen, um jedes Segment in dem ersten Format in ein oder mehrere Segmente in dem zweiten Format umzuwandeln,
und Mittel zum Versenden des Inhalts in dem zweiten Format an die den Inhalt anfordernde Vorrichtung.

13. Computerprogramm-Produkt mit computerausführbaren Befehlen zum Durchführen des Verfahrens nach einem beliebigen der Ansprüche 1-9, wenn das Programm auf einem Computer läuft.

14. Digitales Datenspeichermedium zum Entschlüsseln eines maschinenausführbaren Programms mit Anweisungen, um das Verfahren nach einem beliebigen der Ansprüche 1-9 auszuführen.

## Revendications

1. Procédé de distribution améliorée d'un certain contenu à des terminaux clients dans un réseau de distribution de contenu, le réseau de distribution de contenu comprenant au moins un premier serveur et un deuxième serveur, le procédé comprenant les étapes suivantes :
a) Le premier serveur stocke le certain contenu dans un premier format ;
b) Le premier serveur analyse le certain contenu et crée des règles spécifiques audit certain contenu pour transformer le contenu dans le premier format en au moins un deuxième format ;
c) Le deuxième serveur reçoit une demande demandant le certain contenu à partir d'un dispositif, où le contenu doit être délivré audit dispositif dans le deuxième format ;
d) Le deuxième serveur vérifie si le contenu demandé dans le deuxième format est disponible dans le deuxième serveur et si tel n'est pas le cas, le deuxième serveur demande à un autre serveur du réseau de distribution de contenu le certain contenu dans le deuxième format ;
e) Lors de la réception des demandes provenant du deuxième serveur, ledit autre serveur obtient le contenu dans le premier format et les règles pour transformer le contenu dans le premier format en un deuxième format et les envoie au deuxième serveur.
f) Lors de la réception du contenu dans le premier format et des règles, le deuxième serveur applique les règles pour transformer le contenu dans le premier format au deuxième format ;
g) Le deuxième serveur envoie le contenu dans le deuxième format au dispositif demandant le contenu ;
où l'étape a) comprend : le premier serveur segmentant le certain contenu conformément au premier format et stockant dans le premier serveur les segments du contenu dans le premier format et
où l'étape b) comprend : le premier serveur segmentant le contenu conformément au deuxième format, le premier serveur analysant le contenu dans le premier et le deuxième formats et, suite à ladite analyse, créant les instructions spécifiques pour transformer chaque segment dans le premier format en un ou plusieurs segments dans le deuxième format et le premier serveur stockant les instructions pour transformer chaque segment dans le premier format en segments dans le deuxième format et
où l'étape d'envoi au deuxième serveur du contenu dans le premier format et des règles pour transformer le contenu dans le premier format en un deuxième format à l'étape e) comprend l'étape suivante : envoyer au deuxième serveur, les segments du contenu dans le premier format et les instructions pour transformer chaque segment dans le premier format en un ou plusieurs segments dans le deuxième format et où l'étape du deuxième serveur appliquant les règles pour transformer le contenu dans le premier format au deuxième format à l'étape f) comprend l'étape suivante : le deuxième serveur applique les instructions pour transformer chaque segment dans le premier format en un ou plusieurs segments dans le deuxième format.

2. Procédé selon l'une quelconque des revendications précédentes dans lequel le serveur envoyant le contenu dans le premier format et les règles au deuxième serveur à l'étape e) est le premier serveur.

3. Procédé selon la revendication 1 dans lequel le serveur envoyant le contenu dans le premier format et les règles au deuxième serveur à l'étape e) est un troisième serveur différent du premier serveur, dans lequel ledit troisième serveur a reçu précédemment du premier serveur le certain contenu dans le premier format et les règles.

4. Procédé selon l'une quelconque des revendications précédentes dans lequel le dispositif demandant le contenu est un terminal client.

5. Procédé selon l'une quelconque des revendications 1 à 3 dans lequel le dispositif demandant le contenu est un autre serveur du réseau de distribution de contenu qui a reçu précédemment une demande provenant d'un terminal client demandant le contenu dans le deuxième format.

6. Procédé selon l'une quelconque des revendications précédentes dans lequel le premier serveur est un serveur d'origine du réseau de distribution de contenu et le deuxième serveur est un serveur de substitution du réseau de distribution de contenu.

7. Procédé selon l'une quelconque des revendications précédentes dans lequel le contenu est un contenu multimédia comme de la musique, des images, de la vidéo, de l'audio/vidéo, des présentations multimédia, de l'audio ou tout autre type de contenu multimédia.

8. Procédé selon l'une quelconque des revendications précédentes dans lequel le premier et le deuxième formats sont un format parmi le groupe suivant : le Live Streaming d'Apple, le HTTP Dynamic Streaming d'Adobe, le Smooth Streaming de Microsoft et le MPEG DASH, le deuxième format étant différent du premier format.

9. Procédé selon l'une quelconque des revendications précédentes dans lequel les règles contiennent au moins des instructions identifiant les positions des parties du contenu dans le premier format qui doit être copié pour construire le contenu dans le deuxième format et les boîtiers, en-têtes d'encapsulation pré-calculés ou autres informations relatives à la distribution ou au transport qui doivent être insérés et les positions respectives où ils doivent être insérés, pour construire le contenu dans le deuxième format.

10. Système de distribution améliorée d'un certain contenu à une pluralité de terminaux clients dans un réseau de distribution de contenu, le système comprenant :
- un premier serveur qui comprend :
- des moyens pour stocker le certain contenu dans un premier format et des moyens pour analyser le certain contenu et, suite à ladite analyse, créer des règles spécifiques audit certain contenu pour transformer le contenu dans le premier format en au moins un deuxième format où lesdits moyens comprennent des moyens pour segmenter le certain contenu conformément au premier format et stocker les segments du contenu dans le premier format et pour segmenter le contenu conformément au deuxième format, analyser le contenu dans le premier et le deuxième formats et, suite à ladite analyse, créer les instructions spécifiques pour transformer chaque segment dans le premier format en un ou plusieurs segments dans le deuxième format et stocker les instructions pour transformer chaque segment dans le premier format en segments dans le deuxième format.
- Un deuxième serveur qui comprend :
- des moyens pour recevoir une demande provenant d'un dispositif demandant le certain contenu dans le deuxième format
- des moyens pour vérifier si le contenu demandé dans le deuxième format demandé est disponible dans le deuxième serveur et si tel n'est pas le cas, pour demander le certain contenu dans le deuxième format à un autre serveur du réseau de distribution de contenu ;
- des moyens pour, lorsque le deuxième serveur reçoit d'un autre serveur du réseau de distribution de contenu le contenu dans le premier format, contenir des segments du contenu dans le premier format, et les règles spécifiques audit certain contenu pour transformer le contenu dans le premier format en au moins un deuxième format comprenant les instructions pour transformer chaque segment dans le premier format en un ou plusieurs segments dans le deuxième format, le deuxième serveur appliquant les règles pour transformer le contenu dans le premier format au deuxième format où lesdits moyens comprennent des moyens pour appliquer les instructions pour transformer chaque segment dans le premier format en un ou plusieurs segments dans le deuxième format
et des moyens pour envoyer le contenu dans le deuxième format au dispositif demandant le contenu.

11. Serveur de distribution améliorée d'un certain contenu à une pluralité de terminaux clients dans un réseau de distribution de contenu, le serveur comprenant :
- des moyens pour stocker le certain contenu dans un premier format où lesdits moyens comprennent des moyens pour segmenter le certain contenu conformément au premier format et stocker les segments du contenu dans le premier format
- des moyens pour analyser le certain contenu et, suite à ladite analyse, créer des règles spécifiques audit certain contenu pour transformer le contenu dans le premier format en au moins un deuxième format où lesdits moyens comprennent des moyens pour segmenter le contenu conformément au deuxième format, analyser le contenu dans le premier et le deuxième formats et, suite à ladite analyse, créer les instructions spécifiques pour transformer chaque segment dans le premier format en un ou plusieurs segments dans le deuxième format et stocker les instructions pour transformer chaque segment dans le premier format en segments dans le deuxième format
- des moyens pour que, lorsque le serveur reçoit une demande d'un deuxième serveur demandant le certain contenu dans le deuxième format, le serveur envoie au deuxième serveur le contenu dans le premier format et les règles pour transformer le contenu dans le premier format en un deuxième format où lesdits moyens comprennent des moyens pour envoyer au deuxième serveur les segments du contenu dans le premier format et les instructions pour transformer chaque segment dans le premier format à un ou plusieurs segments dans le deuxième format.

12. Serveur de distribution améliorée d'un certain contenu à une pluralité de terminaux clients dans un réseau de distribution de contenu, le serveur comprenant :
- des moyens pour recevoir une demande provenant d'un dispositif demandant un certain contenu dans un deuxième format
- des moyens pour vérifier si le contenu demandé dans le deuxième format demandé est disponible dans le serveur et si tel n'est pas le cas, pour demander le certain contenu dans le deuxième format à un autre serveur du réseau de distribution de contenu ;
- des moyens pour, lorsque le serveur reçoit d'un autre serveur du réseau de distribution de contenu le contenu dans un premier format, contenir des segments du contenu dans le premier format, et les règles spécifiques audit certain contenu pour transformer le contenu dans le premier format en au moins un deuxième format comprenant les instructions pour transformer chaque segment dans le premier format en un ou plusieurs segments dans le deuxième format, le serveur appliquant les règles pour transformer le contenu dans le premier format au deuxième format où lesdits moyens comprennent des moyens pour appliquer les instructions pour transformer chaque segment dans le premier format en un ou plusieurs segments dans le deuxième format
et des moyens pour envoyer le contenu dans le deuxième format au dispositif demandant le contenu.

13. Produit de programme informatique comprenant des instructions exécutables par un ordinateur pour réaliser le procédé selon l'une quelconque des revendications 1 à 9, lorsque le programme est exécuté sur un ordinateur.

14. Support de stockage de données numériques codant un programme d'instructions exécutable par une machine pour exécuter un procédé selon l'une quelconque des revendications 1 à 9.
